# EUROPÄISCHE PATENTSCHRIFT

(11) **EP 2 601 698 B1**
(45) Veröffentlichungstag und Bekanntmachung des Hinweises auf die Patenterteilung: **02.04.2014**
(21) Anmeldenummer: 11724192.7
(22) Anmeldetag: 07.06.2011
(51) Int. Cl.: B60L 11/18, H01M 2/08, H01M 2/10, H01M 10/05, H01M 10/60

(54) **VERFAHREN ZUR HERSTELLUNG VON BATTERIEMODULEN ODER BATTERIESYSTEMEN MIT EINER MEHRZAHL AN BATTERIEZELLEN**
METHOD FOR PRODUCING BATTERY MODULES OR BATTERY SYSTEMS HAVING A PLURALITY OF BATTERY CELLS
PROCÉDÉ DE FABRICATION DE MODULES DE BATTERIE OU DE SYSTÈMES DE BATTERIE DOTÉS DE PLUSIEURS CELLULES DE BATTERIE

(30) Priorität: 04.08.2010 DE 102010038862
(43) Veröffentlichungstag der Anmeldung: 12.06.2013
(73) Patentinhaber: Robert Bosch GmbH, 70442 Stuttgart (DE); Samsung SDI Co., Ltd., Yongin-si Gyeonggi-do 446-577 (KR)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/059376
(87) Internationale Veröffentlichungsnummer: WO 2012/016737

(56) Entgegenhaltungen:
- EP-A1- 0 353 419
- DE-A1- 1 936 472
- DE-U1- 8 332 780
- GB-A- 896 801
- US-A- 2 389 674
- US-A- 3 449 171
- US-A- 3 986 894

## Beschreibung

Die vorliegende Erfindung betrifft ein Verfahren zur Herstellung von Batteriemodulen oder -systemen mit einer Mehrzahl an Batteriezellen, sowie Batteriemodule oder -systeme, die gemäß diesem Verfahren hergestellt sind.

### Stand der Technik

Batteriemodule oder -systeme umfassen wiederaufladbare elektrische Energiespeicher, die einen breiten Einsatz in tragbaren Konsumgeräten und anderen Anwendungen finden, wie z. B. in teilweise oder ausschließlich elektrisch betriebenen Kraftfahrzeugen. In automobilen Anwendungen gelten Batteriemodule und -systeme und insbesondere Lithium-Ionen-Batteriemodule oder -systeme als Schlüsseltechnologie für die Elektrifizierung des Antriebssystems von Fahrzeugen. Dazu werden Batteriemodule und -systeme benötigt, welche hohe Kapazitäten aufweisen, bevorzugt mit Kapazitäten von nicht weniger als 2 oder 3 Ah. Solche hochkapazitären Batteriemodule und -systeme und insbesondere Lithium-Ionen-Batteriemodule und -systeme sind dazu je nach Einsatzspezifikation modular aufgebaut und umfassen eine Mehrzahl von seriell oder parallel elektrisch verschalteten Batteriezellen.

Ein wesentlicher Aspekt für die erfolgreiche Etablierung dieser Technologie ist u. a., dass diese Batteriemodule oder -systeme kostengünstig und effizient hergestellt werden können. Ein weiterer Aspekt ist, dass diese Batteriemodule oder -systeme möglichst leicht sind, so dass damit ausgestattete und/oder angetriebene Kraftfahrzeuge in ihrer Leistungsfähigkeit möglichst wenig beschränkt werden.

Im Stand der Technik beschriebene Batteriemodule oder -systeme, insbesondere hochkapazitäre Lithium-Ionen Batteriemodule oder -systeme, werden durch aufwändige Verfahren hergestellt, bei denen die einzelnen Komponenten meist mehrfach verpackt vorliegen, um eine ausreichende Fixierung, Dichtung und/oder Isolierung der Bestandteile zu ermöglichen. Dadurch sind die erhaltenen Batteriemodule und -systeme teuer, ineffizient in der Herstellung und relativ schwer.

### Offenbarung der Erfindung

Erfindungsgemäß wird ein Verfahren bereitgestellt zur Herstellung von Batteriemodulen oder Batteriesystemen mit einer Mehrzahl von Batteriezellen, insbesondere von hochkapazitären Batteriemodulen oder -systemen, welches einen oder mehrere Nachteile des geschilderten Standes der Technik vermindert oder überwindet.

Das erfindungsgemäße Verfahren umfasst grundsätzlich folgende Schritte:
- Bereitstellung einer Mehrzahl von Batteriezellen;
- Verschaltung und gegebenenfalls Anordnung der Batteriezellen zur Batteriemodul- oder Batteriesystemarchitektur mittels Zellverbinder;
- Anbringen von Batteriemodul- oder Batteriesystem-Terminals;
- Verpacken aller Batteriezellen des Batteriemoduls oder -systems in einem gemeinsamen, gegebenenfalls einstückigen Kunststoffmantel durch Umspritzen, so dass die Batteriezellen und Zellverbinder des Batteriemoduls oder des
- systems im Wesentlichen vollständig von dem Kunststoffmantel umgeben sind, wobei die Batteriemodul- oder Batteriesystem-Terminals von außen zugänglich bleiben.

Das erfindungsgemäße Verfahren führt dazu, dass die Batteriezellen eines Batteriemoduls oder -systems in einem gemeinsamen Kunststoffmantel eingebettet vorliegen, so dass der Kunststoffmantel als gemeinsames Gehäuse des Batteriemoduls oder -systems fungiert und die Notwendigkeit für die zusätzliche Verpackung von Komponenten in weiteren separaten Gehäusen, z. B. Aluminiumgehäusen, nicht mehr gegeben ist. Dadurch, dass die Batteriezellen in einem gemeinsamen gegebenenfalls einstückigen Kunststoffmantel eingebettet vorliegen, ist die Wahrscheinlichkeit von produktionsbedingten undichten Stellen oder Leckagen reduziert. Die Anzahl an auf Leckage zu prüfenden Körpern und Stellen ist ebenfalls reduziert, da keine Fügestellen, Schweißnähte oder Klebestellen vorhanden sind. Somit wird insgesamt die Anzahl an zu montierenden Teilen reduziert, die Fertigungskosten werden gesenkt und die Fehlerwahrscheinlichkeit im Verfahren ist niedriger. Durch den vollständigen Einschluss sowohl der einzelnen Batteriezellen als auch der Zellverbinder in einem gemeinsamen Kunststoffmantel wird auch eine vereinfachte und verbesserte Isolierung des Zellenpotentials erreicht.

Das erfindungsgemäße Verfahren bezieht sich auf die Herstellung von Batteriemodulen oder Batteriesystemen mit einer Mehrzahl an Batteriezellen. Unter einem Batteriemodul oder einem Batteriesystem wird dabei eine Anordnung zur Versorgung eines Netzes bzw. eines Verbrauchers mit elektrischer Energie verstanden, die eine Batterie mit mindestens einem elektrochemischen Energiespeicher umfasst. Unter einem Energiespeicher kann für die Zwecke der vorliegenden Erfindung jeder Energiespeicher verstanden werden, der eine Energie mittels elektrochemischer Prozesse speichert. Insbesondere sind darunter Energiespeicher zu verstehen, die mehrere in Reihe und/oder gegebenenfalls auch parallel geschaltete Akkumulator- und/oder Batteriezellen enthalten. Bevorzugt umfasst das Batteriemodul oder Batteriesystem Batteriezellen vom Typ der Lithium-Ionen-Zellen, insbesondere vom Typ Li-Ion-Lithium-Ionen-Akku, LiPo-Lithium-Polymer-Akku, LiFe-Lithium-Metall-Akku, Li-Mn-Lithium-Mangan-Akku, LiFePO₄-Lithium-Eisen-Phosphat-Akkumulator, LiTi-Lithium-Titanat-Akku. Das Batteriemodul oder Batteriesystem weist immer mehrere Batteriezellen auf, die zu einer funktionalen Einheit zusammengefasst sind. Dazu können die einzelnen Batteriezellen des Batteriemoduls oder des Batteriesystems mittels an den Terminals angebrachten Zellverbindern derart elektrisch leitend miteinander verbunden vorliegen, dass die gewünschte Batteriemodul- oder Batteriesystemarchitektur erreicht wird. Ein Batteriesystem kann ein oder mehrere Batteriemodule aufweisen.

Neben einer Mehrzahl von Batteriezellen kann ein Batteriesystem weitere Bestandteile umfassen, wie beispielsweise ein Kühlsystem, Sicherheitsvorrichtungen zum Abschalten des Batteriesystems oder zum Trennen des Batteriesystems vom restlichen Netz und/oder ein Batterie-Management-System, welches Regel- und Steuereinheiten umfassen kann, die zum Betrieb, zur geregelten Be- und Entladung, sowie zur Sicherheitsüberwachung der Batterie dienen.

Bevorzugt handelt es sich bei dem Batteriemodul oder dem Batteriesystem um ein Lithium-Ionen-Batteriemodul oder -system, insbesondere um ein Lithium-Ionen-Batteriemodul oder -system mit einer nominalen Kapazität von ≥ 2Ah, bevorzugt von ≥ 3Ah.

Im erfindungsgemäßen Verfahren wird zunächst eine Mehrzahl von Batteriezellen bereitgestellt. Eine Batteriezelle weist meist einen Wickel auf, der zwei durch eine Separatorschicht getrennte Elektroden umfasst. Die beiden Elektroden sind jeweils mit einem von außen zugänglichen Terminal elektrisch leitend verbunden. Die Batteriezellen können jeweils einzeln verkleidet sein. Dazu können die Batteriezellen beispielsweise jeweils in einem Kunststoff versiegelt, mit einer Aluminium-Folie umgeben und/oder in einer Folie eingeschweißt vorliegen und bereitgestellt werden.

Eine funktionsfähige Batteriezelle weist darüber hinaus ein Elektrolyt auf. Aus fertigungs- und sicherheitstechnischen Gründen ist es in Verfahren nach dem Stand der Technik meist notwendig, zunächst Batteriezellen ohne Elektrolyt zu verbauen und erst nach erfolgter Assemblierung den Elektrolyten in die Batteriezellen einzufüllen. Im erfindungsgemäßen Verfahren können dagegen bereits mit Elektrolyt beschickte Batteriezellen bereitgestellt und verbaut werden. Insbesondere werden die Batteriezellen des Batteriemoduls oder -systems vor dem Verpacken des Batteriemoduls oder -systems mit Elektrolyt befüllt. Dies ist möglich, da die Batteriezellen nach erfolgter Verpackung von einem dichten Kunststoffmantel eingeschlossen sind und somit keine Gefahr mehr besteht, dass Elektrolyt freigesetzt werden könnte. Eine separate Verschweißung der Elektrolyt-Einfüllöffnungen der Batteriezellen ist somit ebenfalls nicht notwendig.

Nachdem die Batteriezellen bereitgestellt worden sind, werden die Batteriezellen zur gewünschten Batteriemodul- oder Batteriesystemarchitektur verschaltet und gegebenenfalls entsprechend angeordnet. Dazu werden die Terminals der einzelnen Batteriezellen mittels Zellverbinder derart elektrisch leitend miteinander verbunden, dass die Batteriezellen in der gewünschten Art und Weise eine funktionale Einheit bilden. Die Funktion der Zellverbinder ist es dabei, eine geeignete elektrisch leitende Verbindung zwischen den Terminals der Batteriezellen zu erlauben. Die Zellverbinder können zusätzlich derart ausgeführt sein, dass mittels der Zellverbinder nicht nur die Verschaltung, sondern auch eine relative räumliche Anordnung der einzelnen Batteriezellen zueinander erreicht werden kann. Dabei ist es nicht notwendig, dass die Zellverbinder eine besonders stabile und belastbare räumliche Fixierung der Batteriezellen zueinander gewährleisten, denn die anschließende Verpackung der Batteriezellen zum Batteriemodul oder -system durch Umspritzen mit einem Kunststoff sorgt für die benötigte Stabilität des Batteriemoduls oder -systems. Die Schwindung des Kunststoffs nach dem Spritzvorgang sorgt für eine Vorspannung an den Batteriezellen, so dass eine relative Bewegung der Batteriezellen zueinander weiter erschwert und im Wesentlichen unterbunden ist. Dadurch wird erreicht, dass keine zusätzlichen Fixierungsmittel wie Schrauben oder Haltebänder mehr notwendig sind, die die Batteriezellen in einer vorgegebenen räumlichen Anordnung zueinander halten. Solche Fixierungsmittel können somit eingespart werden. Dadurch kann das Gesamtgewicht des Batteriemoduls oder -systems wesentlich reduziert werden.

Nach der Verschaltung und ggf. geeigneten Anordnung der Batteriezellen werden die Batteriemodul- oder Batteriesystem-Terminals angebracht. Diese Terminals bilden die elektrisch leitende Verbindung nach außen, über die das Batteriemodul oder -system ge- und/oder entladen werden kann. Diese Terminals stellen die Verbindungspunkte zum Verbraucher oder Verbrauchernetz dar und sind auch nach dem Verpacken durch Umspritzen noch von außen zugänglich. Dabei sind die Batteriemodul- oder Batteriesystem-Terminals derart mit den Terminals der Batteriezellen verbunden, dass die Batteriezellen des Batteriemoduls oder -systems darüber ge- und/oder entladen werden können.

Anschließend erfolgt die Verpackung aller Batteriezellen des Batteriemoduls oder -systems in einem gemeinsamen, bevorzugt einstückigen, Kunststoffmantel. Die Verpackung erfolgt durch Umspritzen mit einem Kunststoff. Das Umspritzen erfolgt bevorzugt im Spritzgussverfahren und wird derart ausgeführt, dass alle Batteriezellen und Zellverbinder des Batteriemoduls oder -systems im Wesentlichen vollständig von dem Kunststoffmantel umgeben sind und somit nach allen Richtungen gegen die Umgebung abgegrenzt sind. Dabei wird sichergestellt, dass die Batteriemodul- oder Batteriesystem-Terminals von außen zugänglich bleiben.

In einer bevorzugten Variante des erfindungsgemäßen Verfahrens erfolgt die Verpackung des Batteriemoduls oder des Batteriesystems durch vollständiges Umspritzen in einem einzigen Spritzguss, so dass ein gemeinsamer, einstückiger Kunststoffmantel entsteht, der das Batteriemodul oder das Batteriesystem nach außen als Gehäuse abgrenzt. Durch diese Ausführung wird eine erhöhte Dichtheit und eine verbesserte Isolierung der Komponenten des Batteriemoduls oder -systems erreicht.

Zum Umspritzen wird ein Kunststoff verwendet. Dieser Kunststoff weist bevorzugt eine geringe spezifische Dichte auf, insbesondere eine spezifische Dichte (bezogen auf Wasser unter Normalbedingungen), die geringer ist als die spezifische Dichte von Aluminium bzw. von Aluminium-Legierungen, die üblicherweise bei der Herstellung von Batterie- oder Batteriezellgehäusen verwendet werden. Dadurch kann das Gesamtgewicht des Batteriemoduls oder -systems wesentlich reduziert werden. Insbesondere werden Kunststoffe eingesetzt, die eine chemische Beständigkeit und eine Beständigkeit gegen Korrosion aufweisen, die denen von Aluminium überlegen sind. Bevorzugt wird zum Umspritzen ein Kunststoff oder Kunststoffgemisch eingesetzt, dabei handelt es sich bei dem Kunststoff bevorzugt um Polymere. Insbesondere können Kunststoffe oder Kunststoffgemische eingesetzt werden, die enthalten oder bestehen aus Polymeren, die ausgewählt sind aus Polyamid (PA), PA6, PA66, PA66/6, PA66/67, Polypropylen (PP), Polybutylenterephthalat (PBT), Polyester (PES), Polyarylsulfone (PSU, PESU, PPSU), Polyethylenterephthalat (PET), Polyoxymethylen (POM) und/oder Polyurethan (PU/PUR). Die Polymere können verstärkt sein, z. B. durch Glasfasern.

Als Schmelzklebstoffe (so genannte "hotmelts") können beispielsweise thermoplastische Schmelzklebstoffe auf Basis von Polypropylen (PP) und/oder Polyethylen (PE) verwendet werden und/oder reaktive Schmelzklebstoffe wie z. B. Polyurethan (PU), Epoxidharze und/oder Polyesterharze (UP). Die Schmelzklebstoffe können gegebenenfalls in Kombination mit Glasfasern und/oder Kohlefasern eingesetzt werden.

Es werden Kunststoffe oder Kunststoffgemische für das Umspritzen eingesetzt, die einen Füllstoff enthalten, dessen Beimischung zu einer Erhöhung der Wärmeleitfähigkeit des Kunststoffes oder Kunststoffgemisches führt. Als Füllstoff kann beispielsweise Bornitrid (BN), Aluminiumnitrid (AIN), Aluminiumoxid (Al₂O₃) und/oder Berylliumoxid (BeO) verwendet werden sowie Mischungen daraus oder enthaltend einen oder mehrere der vorgenannten Füllstoffe. Diese Füllstoffe zeichnen sich durch eine günstige Wärmeleitfähigkeit aus und durch den Einsatz solcher Füllstoffe kann die Wärmeleitfähigkeit des Gesamtsystems erhöht werden. Bornitrid zeichnet sich durch eine besonders günstige Wärmeleitfähigkeit aus, während bei diesem Füllstoff die kunststofftypischen Eigenschaften, wie geringes Gewicht sowie sehr gutes elektrisches Isolationsvermögen, erhalten bleiben. Daneben erhöht die Beimischung von Bornitrid die Abriebbeständigkeit und die Temperaturbeständigkeit des damit erzeugten Kunststoffmantels. Bevorzugt wird Bornitrid in Pulverform eingesetzt. Geeignetes Bornitrid ist erhältlich unter dem Markennamen Boronid® von der Firma ESK Ceramics GmbH & Co. KG. Durch die chemische Inertheit von Bornitrid ist dieser Füllstoff mit nahezu allen kommerziell erhältlichen Kunststoffen sehr gut verträglich. Durch die geringe Dichte von Bornitrid wird die niedrige Dichte des Kunststoffs oder des Kunststoffgemisches im Gemisch im Wesentlichen erhalten. Der Anteil des Füllstoffs am Gesamtgemisch für den Kunststoffmantel kann vom gewählten Kunststoff, Füllstoff und den Spezifikationen des Batteriemoduls oder -systems abhängen. Der Fachmann ist in der Lage, im Rahmen von Routinetätigkeiten geeignete Konzentrationen an Füllstoff im Gesamtgemisch zu bestimmen.

Neben den Batteriezellen und den Zellverbindern können noch weitere Bestandteile des Batteriemoduls oder -systems vom Kunststoffmantel umgeben sein. Dabei kann es sich beispielsweise um Bestandteile einer Kühlvorrichtung handeln. In dem Kunststoffmantel können weitere Bestandteile integriert vorliegen. So können beispielsweise im Kunststoffmantel Fixier- und/oder Befestigungspunkte, sowie Halterungen oder Führungen z. B. für Verspannplatten oder Verspannbänder integriert oder vorgesehen sein.

Im Kunststoffmantel kann mindestens ein Sicherheitsventil integriert sein, so dass beispielsweise ein Überdruck im Inneren des Batteriemoduls oder -systems an die Umgebung abgegeben werden kann. Dieses Sicherheitsventil kann in Form einer Sollbruchstelle ausgebildet sein, insbesondere kann dieses Sicherheitsventil als Berst-Sicherung ausgestaltet sein.

Die Abdichtung der Batteriemodul- oder Batteriesystem-Terminals kann im erfindungsgemäßen Verfahren auf mehrere Arten und Weisen erreicht werden. Zunächst wird eine Dichtwirkung an den Terminals schon dadurch erreicht, dass die Schwindung des Kunststoffs nach dem Umspritzen ausgenutzt wird, entsprechend der so genannten "Hosen"-Technik, die bei der Abdichtung oder Isolierung von elektrischen Steckern eingesetzt wird. Alternativ oder zusätzlich können die Batteriemodul- oder Batteriesystem-Terminals vor der Verpackung jeweils mit einem Dichtelement versehen werden, welches nachfolgend mit umspritzt wird. Durch den Druck beim Spritzen und die nachfolgende Schwindung des Kunststoffes werden die Dichtungen komprimiert und mediendicht. Ein solches Dichtelement kann beispielsweise als Einlegebauteil ausgeführt und angefügt sein, entsprechend einer O-Ringdichtung. Ein solches Dichtteil kann aber auch mittels eines separaten Spritzgusses mit einem Elastomer direkt an die Batteriemodul- oder Batteriesystem-Terminals angefügt werden.

Die vorliegende Erfindung bezieht sich auch auf ein Batteriemodul oder ein Batteriesystem, welches nach einem erfindungsgemäßen Verfahren hergestellt wurde oder herstellbar ist.

Die vorliegende Erfindung umfasst auch ein Kraftfahrzeug, welches ein erfindungsgemäßes Batteriemodul oder Batteriesystem enthält. Dabei kommt es nicht darauf an, dass Kraftfahrzeug und Batteriemodul oder Batteriesystem eine bauliche Einheit bilden, sondern, dass Kraftfahrzeug und erfindungsgemäßes Batteriemodul oder Batteriesystem derart funktional in Kontakt stehen, dass das Batteriemodul bzw. das Batteriesystem seine Funktion während des Betriebs des Kraftfahrzeugs erfüllen kann. Dabei sind unter dem Begriff "Kraftfahrzeug" alle angetriebenen Fahrzeuge zu verstehen, die ein Batteriemodul oder Batteriesystem zur Energieversorgung von mindestens einer Komponente des Kraftfahrzeugs aufweisen, unabhängig davon welchen Antrieb diese Kraftfahrzeuge aufweisen. Insbesondere umfasst der Begriff "Kraftfahrzeug" HEV (elektrische Hybridfahrzeuge), PHEV (Plug-In-Hybridfahrzeuge),

EV (Elektrofahrzeuge), Brennstoffzellenfahrzeuge, sowie alle Fahrzeuge, die ein Batteriesystem zur mindestens teilweisen Versorgung mit elektrischer Energie einsetzen.

### Zeichnungen

Ausführungsbeispiele der Erfindung werden anhand der Zeichnungen und der nachfolgenden Beschreibung näher erläutert. Es zeigen:
Figur 1 eine schematische Darstellung eines Längsschnittes durch einen Terminalbereich eines Batteriemoduls, welches nach einem erfindungsgemäßen Verfahren hergestellt wurde,
Figur 2 eine Draufsicht auf eine horizontale Schnittebene durch ein Batteriemodul, welches nach einem erfindungsgemäßen Verfahren hergestellt wurde.

### Ausführungsformen der Erfindung

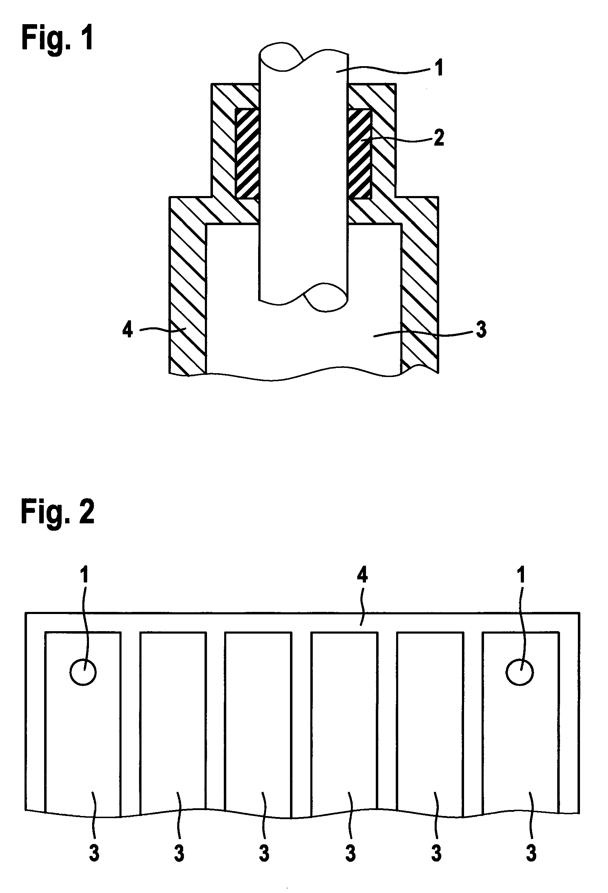

In der Figur 1 ist schematisch ein Längsschnitt durch einen Terminalbereich eines Batteriemoduls gezeigt, welches nach einem erfindungsgemäßen Verfahren hergestellt wurde. Dabei ist der dargestellte Batteriemodul-Terminal 1 von einem Dichtelement 2 umgeben. Der Terminal 1 ist elektrisch leitend mit einer der Batteriezellen 3 des Batteriemoduls verbunden. Nach dem Verpacken durch Umspritzen sind sowohl die Batteriezellen 3 als auch das Dichtelement 2 des Batteriemoduls von einem gemeinsamen einstückigen Kunststoffmantel 4 umgeben und von der Umwelt isoliert.

In Figur 2 ist dargestellt, wie mehrere Batteriezellen 3 eines Batteriemoduls, welches nach einem erfindungsgemäßen Verfahren hergestellt wurde, nach dem Verpacken angeordnet sind. Dabei ist ersichtlich, dass alle Batteriezellen 3 des Batteriemoduls von einem gemeinsamen, einstückigen Kunststoffmantel 4 umgeben sind und zusammengehalten werden. Aus dem Kunststoffmantel 4 ragen lediglich die Batteriemodul-Terminals 1 heraus, so dass diese von außen zugänglich sind.

## Patentansprüche

1. Verfahren zur Herstellung von Batteriemodulen oder Batteriesystemen mit einer Mehrzahl an Batteriezellen, umfassend die Schritte:
- Bereitstellung einer Mehrzahl von Batteriezellen (3);
- Verschaltung und gegebenenfalls Anordnung der Batteriezellen (3) zur Batteriemodul- oder Batteriesystemarchitektur mittels Zellverbinder;
- Anbringen von Batteriemodul- oder Batteriesystem-Terminals (1);
- Verpacken aller Batteriezellen (3) des Batteriemoduls oder -systems in einem gemeinsamen Kunststoffmantel (4) durch Umspritzen, so dass die Batteriezellen (3) und Zellverbinder des Batteriemoduls oder -systems im Wesentlichen vollständig von dem Kunststoffmantel (4) umgeben sind, wobei die Batteriemodul- oder Batteriesystem-Terminals (1) von außen zugänglich bleiben,
**dadurch gekennzeichnet, dass**
dem Kunststoff für das Umspritzen des Batteriemoduls oder -systems Füllstoffe beigemischt sind, wobei als Füllstoff Bornitrid (BN), Aluminiumnitrid (AIN), Aluminiumoxid (Al₂O₃), Berylliumoxid (BeO) und/oder Mischungen daraus oder Mischungen enthaltend einen oder mehrere der vorgenannten Füllstoffe verwendet werden.

2. Verfahren nach Anspruch 1, wobei zum Umspritzen ein Kunststoff verwendet wird, der Polyamid, Polypropylen, Polybutylenterephthalat, Polyester, Polyarylsulfone, Polyethylenterephthalat, Polyoxymethylen und/oder Polyurethan enthält oder daraus besteht.

3. Verfahren nach Anspruch 1 oder 2, wobei eine, mehrere oder alle Batteriezellen (3) des Batteriemoduls oder -systems Lithium-Ionen-Batteriezellen sind.

4. Verfahren nach einem der vorhergehenden Ansprüche, wobei eine, mehrere oder alle Batteriezellen (3) des Batteriemoduls oder -systems vor der Verschaltung einzeln verkleidet bereitgestellt werden, bevorzugt werden die Batteriezellen (3) vor der Verschaltung einzeln mit Kunststoff versiegelt, in Folie eingeschweißt und/oder mit AI-Folie umgeben bereitgestellt.

5. Verfahren nach einem der vorhergehenden Ansprüche, wobei die Batteriezellen (3) des Batteriemoduls oder -systems vor dem Verpacken des Batteriemoduls oder -systems mit Elektrolyt befüllt werden.

6. Verfahren nach einem der vorhergehenden Ansprüche, wobei die Batteriemodul- oder Batteriesystem-Terminals (1) vor der Verpackung des Batteriemoduls oder -systems jeweils mit einem Dichtelement (2) versehen werden.

7. Verfahren nach Anspruch 6, wobei das Dichtelement (2) als Einlegebauteil ausgeführt und eingefügt wird.

8. Verfahren nach Anspruch 6, wobei das Dichtelement (2) mittels Spritzguss mit einem Elastomer direkt an die Batteriemodul- oder Batteriesystem-Terminals (1) angefügt wird.

9. Verfahren nach einem der vorhergehenden Ansprüche, wobei das Verpacken des Batteriemoduls oder -systems durch vollständiges Umspritzen in einem einzigen Spritzguss erfolgt.

10. Verfahren nach einem der vorhergehenden Ansprüche, wobei beim Verpacken des Batteriemoduls oder -systems mindestens ein Sicherheitsventil integriert wird, bevorzugt als Sollbruchstelle, gegebenenfalls in Form einer Berst-Sicherung.

11. Verfahren nach einem der vorhergehenden Ansprüche, wobei dem Kunststoff für das Umspritzen des Batteriemoduls oder -systems als Füllstoff Bornitrid beigemischt ist.

12. Batteriemodul oder Batteriesystem herstellbar nach einem Verfahren gemäß einem der Ansprüche 1 bis 11.

13. Kraftfahrzeug enthaltend ein Batteriemodul oder ein Batteriesystem nach Anspruch 12.

## Claims

1. Method for producing battery modules or battery systems having a plurality of battery cells, comprising the steps of:
- providing a plurality of battery cells (3);
- interconnecting and optionally arranging the battery cells (3) to form the battery module or battery system architecture by means of cell connectors;
- fitting battery-module or battery-system terminals (1);
- packaging all of the battery cells (3) of the battery module or system in a common plastic sheath (4) by encapsulating injection-molding, so that the battery cells (3) and cell connectors of the battery module or system are surrounded substantially completely by the plastic sheath (4), while the battery-module terminals or battery system terminals (1) remain accessible from outside,
**characterized in that**
fillers are admixed with the plastic for the encapsulation of the battery module or system, boron nitride (BN), aluminum nitride (AlN), aluminum oxide (Al₂O₃), beryllium oxide (BeO) and/or mixtures thereof or mixtures containing one or more of the aforementioned fillers being used as fillers.

2. Method according to Claim 1, a plastic which contains or consists of polyamide, polypropylene, polybutylene terephthalate, polyester, polyaryl sulfones, polyethylene terephthalate, polyoxymethylene and/or polyurethane being used for the encapsulation.

3. Method according to Claim 1 or 2, one or more or all of the battery cells (3) of the battery module or system being lithium-ion battery cells.

4. Method according to one of the preceding claims, one or more or all of the battery cells (3) of the battery module or system being provided before the interconnection in a form in which they are individually enclosed, the battery cells (3) preferably being provided before the interconnection in a form in which they are individually sealed with plastic, welded in film and/or surrounded by Al foil.

5. Method according to one of the preceding claims, the battery cells (3) of the battery module or system being filled with electrolyte before the packaging of the battery module or system.

6. Method according to one of the preceding claims, the battery-module or battery-system terminals (1) being provided in each case with a sealing element (2) before the packaging of the battery module or system.

7. Method according to Claim 6, the sealing element (2) being configured as an insert component and inserted.

8. Method according to Claim 6, the sealing element (2) being joined on directly to the battery-module or battery-system terminal (1) by means of injection-molding with an elastomer.

9. Method according to one of the preceding claims, the packaging of the battery module or system being performed by complete encapsulation in a single injection-molding operation.

10. Method according to one of the preceding claims, at least one safety valve being integrated during the packaging of the battery module or system, preferably as a predetermined breaking point, optionally in the form of a rupture disk.

11. Method according to one of the preceding claims, boron nitride being admixed as a filler with the plastic for the encapsulation of the battery module or system.

12. Battery module or battery system that can be produced by a method according to one of Claims 1 to 11.

13. Motor vehicle containing a battery module or battery system according to Claim 12.

## Revendications

1. Procédé de fabrication de modules de batterie ou de systèmes de batterie dotés d'une pluralité de cellules de batterie, comprenant les étapes suivantes :
- fourniture d'une pluralité de cellules de batterie (3) ;
- branchement et éventuellement agencement des cellules de batterie (3) pour former une architecture de modules de batterie ou une architecture de systèmes de batterie au moyen de connecteurs de cellules ;
- montage de bornes de modules de batterie ou de bornes de systèmes de batterie (1) ;
- emballage de toutes les cellules de batterie (3) du module de batterie ou du système de batterie dans une enceinte en plastique commune (4) par surmoulage, de telle sorte que les cellules de batterie (3) et les connecteurs de cellules du module de batterie ou du système de batterie soient sensiblement complètement entourés par l'enceinte en plastique (4), les bornes de modules de batterie ou de systèmes de batterie (1) restant accessibles depuis l'extérieur,
**caractérisé en ce**
**qu'**on mélange des charges au plastique pour le surmoulage du module de batterie ou du système de batterie, du nitrure de bore (BN), du nitrure d'aluminium (AIN), de l'oxyde d'aluminium (Al₂O₃), de l'oxyde de béryllium (BeO) et/ou des mélanges de ceux-ci ou des mélanges contenant une ou plusieurs des charges susmentionnées étant utilisés en tant que charge.

2. Procédé selon la revendication 1, dans lequel, pour le surmoulage, on utilise un plastique qui contient du polyamide, du polypropylène, du téréphtalate de polybutylène, du polyester, du polyarylsulfone, du téréphtalate de polyéthylène, du polyoxyméthylène et/ou du polyuréthane ou se compose de ceux-ci.

3. Procédé selon la revendication 1 ou 2, dans lequel une, plusieurs ou la totalité des cellules de batterie (3) du module de batterie ou du système de batterie sont des cellules de batterie lithium-ion.

4. Procédé selon l'une quelconque des revendications précédentes, dans lequel une, plusieurs ou la totalité des cellules de batterie (3) du module de batterie ou du système de batterie sont fournies de manière revêtue individuellement avant le branchement, de préférence les cellules de batterie (3) sont scellées individuellement avec du plastique avant le branchement, sont soudées dans un film et/ou sont fournies sous forme enveloppée d'un film d'aluminium.

5. Procédé selon l'une quelconque des revendications précédentes, dans lequel les cellules de batterie (3) du module de batterie ou du système de batterie sont remplies d'électrolyte avant l'emballage du module de batterie ou du système de batterie.

6. Procédé selon l'une quelconque des revendications précédentes, dans lequel les bornes du module de batterie ou du système de batterie (1) sont pourvues d'un élément d'étanchéité respectif (2) avant l'emballage du module de batterie ou du système de batterie.

7. Procédé selon la revendication 6, dans lequel l'élément d'étanchéité (2) est réalisé sous forme de composant encastré et est inséré.

8. Procédé selon la revendication 6, dans lequel l'élément d'étanchéité (2) est directement assemblé aux bornes du module de batterie ou du système de batterie (1) au moyen d'un procédé de moulage par injection avec un élastomère.

9. Procédé selon l'une quelconque des revendications précédentes, dans lequel l'emballage du module de batterie ou du système de batterie a lieu par surmoulage complet dans un procédé de moulage par injection unique.

10. Procédé selon l'une quelconque des revendications précédentes, dans lequel lors de l'emballage du module de batterie ou du système de batterie, au moins une soupape de sécurité est intégrée, de préférence en tant que zone destinée à la rupture, éventuellement sous la forme d'une protection anti-explosion.

11. Procédé selon l'une quelconque des revendications précédentes, dans lequel on ajoute en mélange en tant que charge du nitrure de bore au plastique pour le surmoulage du module de batterie ou du système de batterie.

12. Module de batterie ou système de batterie pouvant être fabriqué selon un procédé selon l'une quelconque des revendications 1 à 11.

13. Véhicule automobile contenant un module de batterie ou un système de batterie selon la revendication 12.
